# EUROPEAN PATENT APPLICATION

(11) **EP 1 911 822 A1**
(43) Date of publication of application: **16.04.2008**
(21) Application number: 06122152.9
(22) Date of filing: 12.10.2006
(51) Int. Cl.: C09J 7/02

(54) **Self-adhesive polymer foil and use thereof**

(71) Applicant: Sign Developments B.V., 9591 AD Onstwedde (NL)
(72) Inventor: Houtstra, Jan Martinus Johannes, 9591 AD, Onstwedde (NL); Houtstra, Hessel Martijn, 9591 AD Onstwedde (NL)
(74) Representative: van Heuvel, Margaretha

(57) **Abstract**

The present invention discloses a ready-for-use, self-adhesive, reusable multi-layered foil comprising a surface layer, optionally an adhesive layer, a polymer layer, and a removable cover layer, wherein the polymer layer comprises a polymer obtainable by photopolymerization of a liquid photopolymerizable composition. The foil of the invention is suitable for adhesion on any smooth surface, including wood, metal, plastic, glass, stone, and the like. The foil of the invention has many advantageous properties including reusability, flexibility, printability, long lasting adhesive strength (remaining for many years of (re)use and/or storage), resistance against environmental conditions (harsh weather, UV radiation), compressibility. The foil of the invention can be advantageously used as (temporary) image bearer, protective foil, isolation foil and/or reparation foil.

## Description

The present invention relates to a reusable self-adhesive multilayer polymer foil comprising a photopolymeric adhesive layer and uses thereof.

Magnet foil is especially suitable as temporary image bearer on for example vehicles and sign boards, since it can be provided with any full-colour print, is resistant to outside conditions and is easily removable. However, magnet foil is not very flexible and the print may easily show bends or kinks due to tension between the magnet foil and the print. A further disadvantage of magnet foil is that it can be used on steel only. In addition, cars with water-based paint may suffer from damage of the paint and accumulation of dirt after prolonged use, leading to formation of rust.

Thus, there is a need for a reusable image bearer that is not based on magnet foil but that has similar properties as magnet foil with respect to adhesive strength and ease of removal without leaving any remnants on the site of use.

JP 2001-262094 discloses a multilayer adhesive film for protecting surfaces of articles or for performing decoration. The film needs to have a good plasticity so as to enable following well the surface form of a treated product. After application of the film onto the product of choice, the film needs to be subjected to a further hardening by photoirradiation or heat treatment. Such a film is not reusable.

The present invention provides a ready-for-use non-metal foil that is flexible, has a high adhesive strength, has excellent functional characteristics, does not leave any remnants on the site of use after removal and can be reused many times without reduction of its adhesive strength.

Accordingly, the present invention provides a ready-for-use, self-adhesive, reusable foil comprising a surface layer, a polymer layer, and a removable cover layer, wherein the polymer layer comprises a polymer obtainable by photopolymerization of a liquid photopolymerizable composition. The photopolymerization is effectuated prior to use of the foil, providing a ready-for-use, self-adhesive and reusable foil.

The polymer layer advantageously provides the foil of the invention with a high adhesive strength. The foil is permanently sticky and, despite its permanent stickiness, is easily removable from the site of use without leaving any trace of material thereon.

The term "reusable" as used to describe the foil throughout this invention defines the capability of the foil of the invention to be removable from the site of use without leaving any substantial remnants on the site of use, preferably without leaving any remnants at all, and to be used again and again without loosing its adhesive strength, not even upon prolonged use and/or reuse.

The polymer layer of the foil of the invention comprises a polymer that is obtainable by photopolymerization of a liquid photopolymerizable composition. Such liquid photopolymerizable compositions (also called liquid photopolymer compositions) are known in the art.

The use of a liquid phototopolymer composition advantageously ensures as much as possible freedom to adapt the polymer layer to the intended use, for instance with regard to layer thickness, hardness, adhesive strength, and the like. The use of a liquid phototopolymer composition further advantageously ensures as much as possible freedom in the manufacturing of the foil of the invention, for instance allows convenient incorporation of additional layers.

Typically, a liquid photopolymer composition comprises a prepolymer, an ethylenically unsaturated mono- and/or polyfunctional monomer, a photoinitiator and, optionally, a stabilizer.

The prepolymer has at least one polymerizable double bond. Typical prepolymers may include unsaturated polyester resins, unsaturated polyurethane resins, unsaturated polyamide resins, unsaturated poly(meth)acrylate resins, for example a polyether urethane containing (meth)acrylate groups, and/or a polyether polyester urethane containing (meth)acrylate groups. The prepolymer can also be a hydroxy-terminated hydrogenated polybutadiene resin. Particularly suitable are polyether urethane or polyether polyester urethane based prepolymers, such as those present in commercially available Verbatim® liquid photopolymers from Chemence Ltd., or an unsaturated polyurethane prepolymer as present in the APR series from Asahi Kasei Kogyo K.K.

Throughout the invention, the well-known terms "(meth)acrylic" and "(meth)acrylate" stand for "acrylic or methacrylic" and "acrylate or methacrylate," respectively.

The ethylenically unsaturated mono- and/or polyfunctional monomer preferably is selected from an alkyl and/or a hydroxyalkyl (meth)acrylate, a polyethylene glycol (meth)acrylate and a (meth)acrylamide. Suitable examples of monofunctional (meth)acrylates are 2-ethylhexyl(meth)acrylate, 2-hydroxyethyl(meth)acrylate, 2-hydroxypropyl(meth)acrylate and polyethylene glycol (meth)acrylate. Suitable examples of polyfunctional (meth)acrylates are diethylene glycol di(meth)acrylate, tetraethylene glycol di(meth)acrylate, polyethylene glycol di(meth)acrylate, neopentylglycol di(meth)acrylate, 1,6-hexanediol di(meth)acrylate, trimethylolpropane tri(meth)acrylate, dipentaerythritol penta- or hexa(meth)acrylate, and ethoxylated and/or propoxylated derivatives thereof. Suitable examples of (meth)acryl amides are (meth)acrylamide, N-methylol(meth)acrylamide, methylene bis(meth)acrylamide.

Suitable photo-initiator systems include benzil and derivatives thereof; benzoin and derivatives thereof, such as methyl, ethyl, isopropyl, or n-butyl ethers of benzoin; acetophenone and derivatives thereof, such as 2,2-diethoxyacetophenone, 2,2-dimethoxy-2-phenylacetophenone, 2,2-diethoxy-2-phenylacetophenone; benzophenone and derivatives thereof, such as 2-methyl-benzophenone, 2-methoxy-benzophenone; xanthones such as xanthone, thioxanthone, 2-chloroxanthone, and 2-isopropylxanthone; or mixtures thereof.

Suitable stabilizers that may be added to the photopolymer composition include thermal polymerization inhibitors, sensitizing agents (light absorbers), dyes, pigments, and the like.

Thermal polymerization inhibitors are for instance phenol derivatives including p-methoxyphenol, hydroquinone and derivatives thereof, benzoquinone and derivatives thereof, 2,6-di-t.butyl-p-cresol, nitroso compounds, and the like.

In general, sensitizing agents (light absorbers) are those materials that absorb radiation at a wavelength different than that of the reaction-initiating component, and are capable of transferring the absorbed energy to that component. Thus, the wavelength of the activating radiation can be adjusted.

The photopolymer composition typically contains about 20 to 95 % (w/w) of the prepolymer and about 20 to 95 % (w/w) of the ethylenically unsaturated mono- and/or polyfunctional monomer, both based the total weight of the photopolymer composition. The photo-initiator is typically used in a quantity of from about 0.0001 % to about 10 % (w/w), preferably about 0.001 % to about 10 % (w/w), more preferably about 0.1 to about 7 % (w/w), based on the total weight of the photopolymer composition. If a thermal stabilizer is used, it may be present in a quantity of from 0.001 - 1 % (w/w), preferably from 0.005 - 0.5 % (w/w), based the total weight of the photopolymer composition.

Examples of suitable photopolymer compositions are Verbatim® (ex Chemence), APR® series (ex Asahi, Japan), and Flex-Light (ex McDermid Inc., USA).

The liquid photopolymer composition is cured (polymerized) by irradiation with radiation with a suitable wave length, preferably with UV light, more preferably with UVA light. In this way an adhesive polymer layer is obtained. Typically, with increasing size of the foil, a lower adhesive strength may be required. If the adhesive strength of the foil is too high, a short irradiation with UVC light may be performed to reduce the adhesive strength.

By changing the components in the photopolymer composition, foils of different degrees of hardness may be formed. The hardness of the foil may vary from 30 to 75 Shore A, preferably from 50 to 60 Shore A.

In addition to the polymer layer, the foil of the invention comprises a surface layer on top of the polymer layer, and a removable cover layer (backing layer) for protection of the polymer layer against e.g. dirt.

The surface layer provides the foil of the invention with the desired functional properties, which properties depend on the intended use of the foil. The material of the surface layer thus should be suitable to provide the foil of the invention with a functional property of choice. The surface layer may further provide support for the polymer layer. Preferably, the surface layer is printable, for instance by using an ink-jet printer or by screen printing. Other advantageous functional properties of the surface layer may be compressibility (shock absorption), isolation and/or protection against environmental influences (sound proofing, heat isolation, UV protection). Preferably, the foil of the invention may be sufficiently flexible to be put on a roll.

A suitable surface layer material may for instance be (plasticized) cardboard, imitation leather, fibreboard, plastic foils like polyethylene, polypropylene, polycarbonate, polyester and/or polyvinylchloride foil, electroluminescent foil, woven materials, and the like. The surface layer may be transparent or non-transparent. It may be necessary to use surface material that is provided with a coating, known as receiver coating, to make it printable. A suitable flexible and printable surface foil for instance is available from Ubbens (Zutphen, the Netherlands).

The cover layer may protect the polymer layer against e.g. dirt and is removable. The cover layer may be of any flexible material, such as polyester. Typically, it has a thickness of about 0.05 to 0.15 mm. Since the cover layer is removable, the foil of the invention without the cover layer also forms an embodiment of this invention.

In one embodiment, an adhesive layer may be added to the foil of the invention, in between the surface layer and the polymer layer. This embodiment is applicable in a situation that the surface structure of the surface layer is such that it does not provide a basis for proper adherence of the polymer layer. The composition of such an adhesive layer is commonly known in the art.

In another embodiment, a further functional layer may be added to the foil of the invention, to provide a desired functionality to the foil. This embodiment is applicable in a situation that it is not feasible to provide the surface layer with the desired functionality, for instance because a functional layer needs further protection by an additional layer, i.e. the surface layer. Such a further functional layer typically may be provided between the surface layer and the polymer layer. An adhesive layer may optionally be present between the surface layer and the further functional layer.

An example of a suitable functional layer is a foam layer, for instance a polyurethane layer, to make the foil compressible and/or useful as isolation foil. Another example of a suitable further layer is an isolation layer, for instance to provide isolation against heat, frost and/or sound.

The foil of the invention is suitable for adhesion on any smooth surface, including wood, metal, plastic, glass, stone, and the like.

The foil of the invention has many advantageous properties including reusability, flexibility, printability, long lasting adhesive strength (remaining for many years of use and/or storage), resistance against environmental conditions (harsh weather, UV radiation), compressibility.

The foil of the invention conveniently is deliverable having a thickness of 0.2 mm or higher. The upper limit of the foil thickness may among others be determined by the desired functional property of the foil. For instance, inclusion of a foam layer may substantially increase thickness of the foil. Typically, the upper limit of the foil may vary from about 10 to about 30 mm.

The foil of the invention further is deliverable in sheets of varying size, for instance up to 1.2 by 2 m, or on a roll providing sheets of varying width.

The foil of the invention can be made by any method for making such foils. The method typically comprises the steps of applying a liquid photopolymerizable composition as a layer to a foil suitable to function as a cover layer, applying a foil suitable to function as a surface layer and optionally provided with an adhesive layer onto the photopolymerizable composition layer and curing the photopolymerizable composition using UV irradiation.

For instance, the surface of a glass plate is provided with a removable foil suitable to function as a cover layer. over which subsequently a liquid photopolymerizable composition as described above is poured. The removable foil must not permanently adhere to the photopolymer when the latter is being cured (photopolymerized). The liquid photopolymer composition is distributed with the aid of a doctor blade or the like to obtain a uniform thickness. After that a surface layer is applied to adhere to the photopolymer layer. At its surface facing the photopolymer, said surface layer may optionally be provided with an adhesive that adheres very well to the cured polymer. In order to provide a good contact between the surface layer and the photopolymer, and in order to adjust to the required foil thickness, this treatment may be performed by applying pressure.

It is also possible to apply the photopolymer composition between a surface and cover sheet, and to roll the sheets with applied photopolymer composition between one or more pairs of rollers thereby defining a uniform thickness of the foil of the invention.

Curing is then performed using UV irradiation. Curing may occur from both sides of the foil simultaneously or from one side only. For this purpose, a surface and/or cover layer may be made of material that is permeable to the curing radiation.

The foil of the invention is advantageously used for any purpose where use of a self-adhesive reusable foil is envisaged, for instance as (temporary) image bearer in the sign industry and/or for any application of an isolation, reparation or protective foil. Prior to use of the foil, the cover layer is suitably removed.

A preferred method of using the foil of the invention comprises exposing the polymer layer of the foil by removing the cover layer when present and applying the foil to a surface of choice by adhering the exposed polymer layer to the surface. The foil can be removed from the site of use and reapplied on the same or another surface. A suitable surface of choice may be any smooth surface.

After use of the foil, the foil can conveniently be stored for a prolonged time period without any decrease of its adhesive strength. The foil can advantageously be stored in rolled form. It is preferred to store the foil in the dark. If desired, the cover layer may be reapplied to the foil for proper storage. However, storage without the cover foil is also feasible. If contaminated, the foil may easily be cleaned by wiping the adhesive surface with a solvent or detergent.

The use as (temporary) image bearer encompasses advertisement purposes, signposting, warning signs and/or decoration. The printable surface layer of the foil of the invention may advantageously be provided by any desired print. The latter may be done by using any suitable printing method, for instance by an ink jet printer or by screen printing. The surface layer may be adapted to the printing method of choice. Although it is advantageous that the foil of the invention is printable, it is also possible to use a preprinted film as surface layer

The use as protective foil encompasses protection against UV irradiation. In one embodiment, the surface layer of the foil has UV-resisting properties, i.e. by absorbing or reflecting UV light. Alternatively, an additional functional layer with UV-resisting properties may be present in the foil of the invention.

A particular use as protective foil encompasses protecting manufacturing processes and activities and/or surgical and other medical activities against all types of dust. For instance, the foil of the invention is suitable as hygienic wall coating and/or as floor mat for use in e.g. surgery rooms, manufacturing rooms and/or laboratories, for adhesion of dust, insects, and the like. For this application, the polymer layer of the foil of the invention is exposed to the environment, contrary to the common use of the foil of the invention, where the surface layer is exposed. The foil of the invention may be applied to the desired surface using any suitable attachment means, like adhesive strips or tape.

The use as isolation foil encompasses soundproofing, heat isolation and/or anti-freeze application, for instance for vehicle or train windows.

The use as reparation foil in particular encompasses the use for temporary repairing glass windows or vehicle windows.

If the foil of the invention becomes dirty after repeated use, it can conveniently be cleaned by wiping with a solvent, e.g. water or alcohol, or detergent without losing its adhesive strength.

## Claims

1. A ready-for-use, self-adhesive, reusable foil comprising a surface layer, a polymer layer, and a removable cover layer, wherein the polymer layer comprises a polymer obtainable by photopolymerization of a liquid photopolymerizable composition.

2. The foil of claim 1, wherein the liquid photopolymerizable composition is UV curable.

3. The foil of claim 1 or 2, wherein the liquid photopolymerizable composition comprises a prepolymer having at least one polymerizable double bond, an ethylenically unsaturated mono- and/or polyfunctional monomer and a photoinitiator.

4. The foil of any one of the preceding claims comprising an adhesive layer between the surface layer and the polymer layer.

5. The foil of any one of the preceding claims comprising a further functional layer between the surface layer and the polymer layer.

6. The foil of any one of the preceding claims, wherein the surface layer is printable.

7. The foil of any of the preceding claims which is compressible.

8. The foil of any of the preceding claims, wherein the cover layer is removed.

9. A method for preparation of the foil of any one of the preceding claims comprising applying a liquid photopolymerizable composition as a layer to a foil suitable to function as a cover layer, applying a foil suitable to function as a surface layer and optionally provided with an adhesive layer onto the photopolymerizable composition layer and then curing the photopolymerizable composition using UV irradiation.

10. A method of using the foil of any one of the claims 1-8 that comprises exposing the polymer layer of the foil by removing the cover layer when present and applying the foil to a surface of choice by adhering the exposed polymer layer to the surface.

11. The method according to claim 10 that further comprises removing the foil from the surface of choice and reapplying the foil on the same or another surface.

12. Use of the foil of any one of claims 1-8 as image bearer, protective foil, isolation foil and/or reparation foil.

13. Use of claim 9, wherein the use as image bearer comprises advertisement, signposting, warning signs and/or decoration.

14. Use of claim 9, wherein the use as protective foil comprises protection against UV radiation.

15. Use of claim 9, wherein the use as isolation foil comprises soundproofing, heat isolation and/or anti-freeze application.

16. Use of claim 9, wherein the use as reparation foil comprises temporary repairing glass windows or vehicle windows.
